(19)

Europäisches
Patentamt
European
Patent Office
Office européen
des brevets

(11)  **EP 4 503 514 A1**

(12)  **EUROPEAN PATENT APPLICATION**

(43) Date of publication:
**05.02.2025 Bulletin 2025/06**

(21) Application number: **23188801.7**

(22) Date of filing: **31.07.2023**

(51) International Patent Classification (IPC):
*H04L 9/40* $^{(2022.01)}$     *H04W 12/03* $^{(2021.01)}$
*G06F 21/60* $^{(2013.01)}$

(52) Cooperative Patent Classification (CPC):
**H04L 63/0428; G06F 21/606; H04L 63/10;**
**H04W 12/03**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **DataVaccinator S.à.r.l.**
**1470 Luxembourg (LU)**

(72) Inventor: **Schmid, Volker**
**78176 Blumberg (DE)**

(74) Representative: **Dilg, Haeusler, Schindelmann**
**Patentanwaltsgesellschaft mbH**
**Leonrodstraße 58**
**80636 München (DE)**

Remarks:
Amended claims in accordance with Rule 137(2)
EPC.

(54)  **METHODS AND PARTICIPATING UNITS IN A SECURE END-TO-END ENCRYPTED DATA TRANSFER**

(57)   Described is a method comprising: exchanging an encrypted payload (108) between a sender unit (102) and a recipient unit (104); using a first key (126) for decryption of the encrypted payload (108); using a second key (110) for providing access to the encrypted payload (108); the first key (126) being different from the second key (110). Further described are a communication network (100), individual units (102, 104, 106) thereof as well as methods for operating the units (102, 104, 106).

Fig. 1

EP 4 503 514 A1

**Description**

TECHNICAL FIELD

The subject matter disclosed herein relates to the field of secure data exchange.

BACKGROUND

It is commonly known to protect data by a password and enable a recipient of the data to access the data by providing the password to the recipient. Further, it is known to use asymmetric encryption which however requires users to master sophisticated procedures for handling of private/public keys. If symmetric encryption is used, a password is needed that withstands brute-force attacks. Such passwords are hard to handle and exchange.

SUMMARY

In view of the above-described situation, there still exists a need for an improved technique that enables a secure but easy to handle exchange of data.

This need may be met by the subject matter according to the independent claims. Advantageous embodiments of the herein disclosed subject matter are described by the dependent claims.

According to a first aspect of the herein disclosed subject matter there is provided a method.

According to an embodiment of the first aspect there is provided a method, the method comprising: exchanging an encrypted payload between a sender unit and a recipient unit; using a first key for decryption of the encrypted payload; using a second key for providing access to the encrypted payload; the first key being different from the second key.

According to a second aspect of the herein disclosed subject matter there is provided a method of operating a sender unit.

According to an embodiment of the second aspect, there is provided a method of operating a sender unit, the method comprising: generating an encrypted payload by encrypting a payload with a first key; providing, to a recipient unit data necessary for generating a second key, the second key providing access to the encrypted payload; the first key being different from the second key.

According to an embodiment of the third aspect, there is provided a method of operating a recipient unit.

According to an embodiment of the third aspect, there is provided a method of operating a recipient unit, the method comprising: receiving data necessary for generating a second key; generating the second key by using the data necessary for generating the second key, the second key providing access to encrypted payload at a server unit; decrypting the encrypted payload with a first key; the first key being different from the second key.

According to a fourth aspect, there is provided a method of operating a server unit.

According to an embodiment of a fourth aspect, there is provided a method of operating a server unit, the method comprising: receiving an encrypted payload from a sender unit; storing the encrypted payload; the encrypted payload being decryptable with a first key; the server unit comprising neither the first key nor all data necessary to generate the first key.

According to a fifth aspect, there is provided a sender unit.

According to an embodiment of the fifth aspect, there is provided a sender unit, the sender unit comprising a control unit being configured for performing the method according to the second aspect.

According to sixth aspect, there is provided a recipient unit.

According to an embodiment of the sixth aspect, there is provided a recipient unit, the recipient unit comprising a control unit being configured for performing the method according to the third aspect.

According to a seventh aspect, there is provided a server unit.

According to an embodiment of the seventh aspect, there is provided a server unit, the server unit comprising a control unit being configured for performing the method according to the fourth aspect.

According to an eighth aspect, there is provided a communication network.

According to an embodiment of the eighth aspect, there is provided a communication network, the communication network being configured for performing the method according to the first aspect.

According to a ninth aspect, there is provided a computer program product.

According to an embodiment of the ninth aspect, there is provided a computer program product, the computer program product comprising a program element (e.g. a non-transitory program element) being configured for, when being executed on a processor device, performing the method according to anyone of the first aspect, the second aspect, the third aspect or the fourth aspect.

DESCRIPTION OF EXEMPLARY EMBODIMENTS

While certain disadvantages of prior technologies may be noted herein, the claimed subject matter is not to be limited to implementations that solve any or all of the noted disadvantages of the prior technologies. Likewise, while certain advantages of the herein disclosed subject matter are mentioned in or are implied by the present disclosure, the claimed subject matter is not to be limited to implementations that exhibit any or all of these advantages.

In the following, exemplary embodiments of the herein disclosed subject matter are described, any number and any combination of which may be realized in an implementation of aspects of the herein disclosed subject matter.

At least some of the aspects and embodiments of the herein disclosed subject matter are based on the idea that using two different keys, a first key for decryption of an encrypted payload and a second key for providing access to the encrypted payload may provide a secure transmission of data at minimum requirements between sender and recipient. At least some of the aspects and embodiments of the herein disclosed subject matter are further based on the idea that private data (e.g. a password or any other known secret between the exchanging parties) may be used for generating both the first key and the second key. In some aspects and embodiments of the herein disclosed subject matter even weak private data (e.g. a weak password) may be sufficient for providing a secure end-to-end encrypted data transfer.

Herein, in several embodiments reference is made to a feature with the indefinite article, e.g. in describing embodiments of different aspects or in describing different embodiments of the same aspect. However, it should be understood that the use of the indefinite article in this disclosure is not restrictive and that, in any event, a feature referenced in different embodiments, irrespective of whether it is referenced with the defined article or with the indefinite article, relates at least in an embodiment to the same feature and hence, in a combination of different embodiments, the feature may be referenced with the indefinite article in the first occurrence of the feature and may be referenced with the defined article in the further occurrence/occurrences of the feature. Further, in an embodiment at least some of the aspects are different aspects of the same subject matter.

According to an embodiment of the first aspect, a method comprises exchanging an encrypted payload between a sender unit and a recipient unit (e.g. transferring an encrypted payload from a sender unit to a recipient unit). According to a further embodiment, the method comprises using a first key for decryption of the encrypted payload. Accordingly, the first key may also referred to as document key. According to a further embodiment, the method comprises using a second key for providing access to the encrypted payload. Accordingly, the second key may be also referred to as access key. According to a further embodiment, the first key is different from the second key.

Examples of a payload include at least one of an individual text message, a file attachment, etc. For example, if used for communication for typical data transactions in healthcare, the payload data may be free text and up to 5 documents (like PDF or JPG), just to give an example.

According to a further embodiment, the method comprises (i) generating the first key from at least two pieces of data, the at least two pieces of data including first data (e.g. a document salt) and second data (e.g. an access salt); and (ii) generating the second key using the second data. According to a further embodiment, generating the second key does not use the first data. Hence, according to an embodiment the first key and the second key are generated by using a common piece of data and at least one of the first key and the second key is generated by using a non-common piece of data. According to an embodiment the first data is data necessary for generating the first key, e.g. only necessary for generating the first key (and vice versa). According to a further embodiment, the second data is data necessary for generating the first key and is also data necessary for generating the second key (and vice versa).

According to a further embodiment, generating the first key and/or generating the second key comprises using private data. For example, according to an embodiment, the private data is known to the sender unit as well as to the recipient unit. For example, according to an embodiment the private data is also referred to as shared secret (shared between the sender unit and the recipient unit). For example, according to a further embodiment the shared secret is a password.

According to an embodiment, the private data may be a weak password which is not secure when applying brute force. Nevertheless, by implementing embodiments of the herein disclosed subject matter the shared secret is elevated to a secure password for symmetric encryption. For example, as described herein, according to embodiments of the herein disclosed subject matter, the payload is not encrypted by the private data/shared secret alone. In consequence, any attacker would need to brute force additional long and secure keys in order to get access to the payload.

Examples of private data may include one or more of an insurance ID, a contract ID, a birthdate, and individually agreed password, etc.

According to an embodiment, generating a key (e.g. generating the first key and/or generating the second key) involves a digest function H(), e.g. a cryptographic hash function (abbreviated herein as "hash function") such as SHA2 or SHA3. According to an embodiment, the input data to the digest function include the private data as well as a so-called cryptographic salt (or just "salt"), i.e. random data fed as additional input data to the digest function.

According to an embodiment, at least one of the first data and the second data is the random number, e.g. a 256 bit random number. For example, according to an embodiment the first data and/or the second data is a salt for the digest function H(). For example, according to an embodiment the first key (document key) is the output of the digest function receiving the private data, the first data and the second data as an input. Further, according to an embodiment the second key (access key) is the output of the digest function receiving the private data and the second data as an input. Hence, in such an embodiment the second data may be referred to as access salt (indicating that the salt is used for generating the access key) and the first data may be referred to as document salt (indicating that the salt is used only for generating the document key).

According to an embodiment, the method comprises providing the first data (e.g. a document salt) via a first data path to the recipient unit; and providing the second data (e.g. an access salt) via a second data path to the recipient unit, wherein the first data path is different from the second data path. For example, according to an embodiment, the first data path includes a server unit and the second data path does not include the server unit. Accordingly, in such a case the server unit is not aware of the first data. Hence, if the first data is necessary for generating the first key, the server unit is not able to generate the first key and hence the server unit is not able to decrypt the encrypted payload.

According to an embodiment, the first key is a symmetric key and the method further comprises generating the first key by the sender unit for encrypting the payload; and generating the first key by the recipient unit for decrypting the encrypted payload. According to an embodiment, encrypting the payload is performed by using an encryption algorithm. According to an embodiment, the encryption algorithm provides both, encryption and integrity check. For example, the encryption algorithm may be AES-GCM. Other examples of block modes (other than GCM) are e.g. CCM mode, CWC mode or OCB mode. According to an embodiment, the encryption algorithm may use an additional random number, e.g. an initialization vector iv. The additional random number may be generated for example by the sender unit. According to an embodiment, a random number described herein (e.g. the access salt, the document salt, the additional random number) is generated by a random number generator (RNG) that satisfies cryptographic needs.

According to a further embodiment, the method further comprises the sender unit providing the encrypted payload to a server unit; providing data (e.g. the second data) necessary for generating the first key from the sender unit to the recipient unit without providing these data to the server unit; and/or providing data (e.g. the second data) necessary for generating the first key from the sender unit to the recipient without providing these data to the server unit. According to a further embodiment, the (second) data necessary for generating the first key and/or (second) data necessary for generating the second key are the same data. In other words, according to an embodiment these data (also referred to as second data) are data necessary for generating a second key and necessary for generating the first key. For example, as described herein, the second data (e.g. access salt), which is according to an embodiment necessary for generating the first key and for generating the second key, is not provided to the server unit.

According to an embodiment, the private data as well as the second data are not provided to (e.g. not exposed to) the server unit. Hence, decryption of the payload by the server is impossible and the payload is secure in the server storage even if the server storage (or the respective database at the server) would be exposed to the public in case of a data leakage. It is noted that the same is also true if only one of the private data and the second data is not provided to the server unit.

According to a further embodiment the method comprises providing data necessary for generating the second key from the sender unit to the recipient unit without providing these data to the server unit. In an embodiment, where the second data (e.g. access salt) is also necessary for generating the second key, providing the second data to the recipient unit but not to the server unit is also an example for this embodiment.

According to an embodiment, the method further comprises providing further data to the server unit, e.g. by the sender unit. For example, the further data provided to the server unit may include one or more of the additional number used by the encryption algorithm, sender identifying data, etc. The sender identifying data may include one or more of a full name of the user of the sender unit, an address information of the user of the sender unit (like ZIP Code and/or city), a customer number, etc.

According to an embodiment, providing of the data necessary for generating the second key (e.g. the second data) and/or providing of the data necessary for generating the first key (e.g. the second data) includes providing a link (e.g. a hyperlink) from the sender unit to the recipient unit; the link including at least one of (i) the data necessary for generating the second key (e.g. the second data), the data necessary for generating the first key (e.g. the second data), and (iii) a reference to the encrypted payload at the server unit. For example, providing to the recipient unit a link to the encrypted payload at the server unit is a very convenient way of providing the recipient unit with the encrypted payload. According to an embodiment, the (first) data necessary for generating (only) the first key (e.g. the first data) are included in the link in a way such that the web browser of the recipient unit does not submit this data to the called website at the server unit. For example, according to an embodiment the data necessary for generating only the first key are included in the link as URI fragment. The link may be provided to the recipient unit by using email or any other text submission. According to an embodiment, the link is generated by the sender unit.

According to an embodiment, the method further comprises providing the second key from the recipient unit to the server unit; and upon approval, by the server unit, of the second key provided by the recipient unit, providing by the server unit to the recipient unit the encrypted payload and/or data (e.g. the first data) necessary for generating the first key.

According to an embodiment, the data necessary for generating the first key (e.g. data necessary for generating only the first key) is the first data (e.g. the document salt).

According to an embodiment, the server unit generates a payload identifier from part or all of the data provided by the sender unit to the server unit, the payload identifier identifying the encrypted payload at the server unit. The server unit may provide the payload identifier to the sender unit. According to a further embodiment, the method comprises providing, by the sender unit, the payload identifier to the recipient unit. For example, according to an embodiment the payload identifier is included in the link.

According to a further embodiment, the method further comprises providing, by the recipient unit, a payload identifier to the server unit; in response to providing the payload identifier to the server unit, the recipient unit receiving from the server unit sender identifying data; and the recipient unit capturing the private data by using the sender identifying data.

According to an embodiment, capturing the private data (by the recipient unit) may include requesting (e.g. by the recipient unit) the private data from the sender unit, e.g. by using the sender identifying data. In another embodiment, capturing the private data may include selecting the private data associated with the sender identifying data.

According to an embodiment, the method further comprises the recipient unit generating the second key by using the private data and the data (e.g. the second data) necessary for generating the second key.

According to a further embodiment, the method further comprises the recipient unit generating the first key by using the private data, the data necessary for generating the second key and the data necessary for generating (only) the first key.

While above the method according to the first aspect and embodiments thereof has been described from a general perspective, the individual units (in particular the sender unit, the recipient unit and the server unit) may of course be considered as operating from their individual perspective, being related to the respective aspects of the herein disclosed subject matter. Examples of respective individual methods are described in the following. Further, embodiments relating to a configuration of the individual entities are described. As generally herein, embodiments among different aspects can be combined.

In the following, exemplary embodiments of the second aspect are described.

According to an embodiment of the second aspect, a method of operating a sender unit is provided, the method comprising generating an encrypted payload by encrypting a payload with a first key. According to a further embodiment, the method comprises providing to a recipient unit data (e.g. the second data) necessary for generating a second key and/or data (e.g. the second data) necessary for generating the first key, the second key providing access to the encrypted payload. According to a further embodiment, the first key is different from the second key. According to an embodiment, the method comprises providing to a recipient unit data necessary for generating a second key and necessary for generating the first key.

According to a further embodiment, the method (in particular the method according to the second aspect) further comprises providing the encrypted payload to the recipient unit via a first data path; and providing to the recipient unit the data (e.g. the second data) necessary for generating the first key and/or the data (e.g. the second data) necessary for generating the second key via a second data path.

According to a further embodiment, the data (e.g. the second data) necessary for generating the second key (e.g. the second data) and/or the data necessary for generating the first key (e.g. the first data) is provided to the recipient unit by a link, the link including the data necessary for generating the second key (e.g. the second data). According to an embodiment, the link also includes the data necessary only for generating the first key - however, in accordance with an embodiment these data (first data) are included in the link in a way that these data are not provided to the server unit upon opening the link.

In the following, exemplary embodiments of the third aspect are described.

According to an embodiment of the third aspect, there is provided a method of operating a recipient unit, the method comprising receiving data necessary for generating a second key. According to a further embodiment, the method further comprises generating the second key by using the data necessary for generating the second key, the second key providing access to the encrypted payload at a server unit. According to a further embodiment, the method comprises decrypting the encrypted payload with a first key, the first key being different from the second key.

In the following, exemplary embodiments of the fourth aspect are described.

According to an embodiment of the fourth aspect, a method of operating a server unit is provided, the method comprising receiving an encrypted payload from a sender unit. According to a further embodiment, the method comprises storing the encrypted payload. According to a further embodiment, the encrypted payload is being decryptable with a first key, wherein the server unit comprising neither the first key nor all data necessary to generate the first key.

In the following, exemplary embodiments of the fifth aspect are described.

According to an embodiment of the fifth aspect, a sender unit is provided, the sender unit comprising a control unit. According to an embodiment, the control unit is configured for generating an encrypted payload by encrypting a payload with a first key. According to a further embodiment, the control unit is configured for providing, to a recipient unit, data necessary for generating a second key and/or data necessary for generating the first key, the second key providing access to the encrypted payload, wherein the first key is different from the second key.

In the following, exemplary embodiments of the sixth aspect are described.

According to an embodiment of the sixth aspect, a recipient unit is provided, the recipient unit comprising a control unit. According to an embodiment, the control unit is configured for receiving data necessary for generating a second key. According to a further embodiment, the control unit is configured for generating the second key by using the data necessary for generating the second key, the second key providing access to encrypted payload at a server unit. According to a further embodiment, the control unit is configured for decrypting the encrypted payload with a first key, the first key being different from the second key.

In the following, exemplary embodiments of the seventh aspect are described.

According to an embodiment of the seventh aspect a server unit is provided, the server unit comprising a control unit. According to an embodiment of the seventh aspect, the control unit is configured for receiving an encrypted payload from a sender unit. According to a further embodiment, the control unit is configured for storing the encrypted payload. According to an embodiment, the encrypted payload is decryptable with a first key, wherein the server unit comprises neither the first key nor all data necessary to generate the first key.

In the following, exemplary embodiments of the eighth aspect are described.

According to an embodiment of the eighth aspect, a communication network is provided, the communication network being configured for exchanging an encrypted payload between a sender unit and a recipient unit. According to a further embodiment, the communication network is configured for using a first key for decryption of the encrypted payload; and using a second key for providing access to the encrypted payload, wherein the first key is different from the second key.

According to a further embodiment, the communication network comprises a sender unit according to the first aspect. According to a further embodiment, the communication network comprises a recipient unit according to the sixth aspect. According to a further embodiment the communication network comprises a server unit according to the seventh aspect.

In the following, exemplary embodiments of the ninth aspect are described.

According to an embodiment of the ninth aspect, a computer program product is provided, the computer program that comprising a program element being configured for, when being executed on a processor device, performing a method disclosed herein. For example, according to an embodiment, the program element is configured for, when being executed on a processor device, performing a method according to the first aspect. According to a further embodiment, the program element is configured for, when being executed on a processor device, performing the method according to the second aspect. According to a further embodiment, the program element is configured for, when being executed on a processor device, performing the method according to the third aspect. According to a further embodiment, the program element is configured for, when being executed on a processor device, performing the method according to the fourth aspect.

For example, according to an embodiment the computer program product is configured for, when being executed on at least one processor device in a communication network, exchanging an encrypted payload between a sender unit and a recipient unit, using a first key for decryption of the encrypted payload, using a second key for providing access to the encrypted payload, wherein the first key is different from the second key.

According to a further embodiment, the computer program product is configured for, when being executed on a processor device of a sender unit, generating an encrypted payload by encrypting a payload with a first key; providing, to a recipient unit, data necessary for generating a second key, the second key providing access to the encrypted payload; the first key being different from the second key.

According to a further embodiment, the computer program product is configured for, when being executed on a processor device of a recipient unit, receiving data necessary for generating a second key; generating the second key by using the data necessary for generating the second key, the second key providing access to encrypted payload at the server unit; decrypting the encrypted payload with a first key; the first key being different from the second key.

According to a further embodiment, the computer program product is configured for, when being executed on a processor device of a server unit, receiving an encrypted payload from a sender unit; storing the encrypted payload; the encrypted payload being decrypted with a first key; the server unit comprising neither the first key nor all data necessary to generate the first key.

According to an embodiment, aspects of the herein disclosed subject matter may be implemented by using a server unit, for example a web service running on a server unit. By using a server unit, according to an embodiment brute force attacks against the shared secret can be controlled. For example, according to an embodiment the control unit of the server unit (in particular the web service provided by the control unit) may slow down tries or may stop after a limited number of attempts. Therefore, the shared secret does not need to be as complex as it would be for a traditional encryption process which uses the shared secret alone. Hence, even less secure shared secrets like an insurance ID or a week password may be good enough to provide an adequate level of security. Further, according to an embodiment the first key is generated from data unknown to the server or the web service, respectively. For example, according to an embodiment the first key is unknown to the provider of the web service. Hence, even the provider of the web service cannot decrypt the payload, e.g. using brute force.

It is noted that embodiments of the herein disclosed subject matter may be implemented on various transport channels, for example email, messenger, SMS or any text based transmission method.

Examples of each of the sender unit, the recipient unit or the server unit are for example a network node, a desktop computer, a server computer, a mobile phone, a tablet, etc.

According to an embodiment, the implementation of embodiments of the herein disclosed subject matter does not require specific software to be installed. Rather, according to an embodiment a web browser is sufficient.

Generally, a herein disclosed control unit may comprise a processor device executing a program element according to embodiments of the herein disclosed subject matter. For example, the program element may be executed in a web browser which is in turn running on the processor device. Further, the program element may be provided by a web service provided e.g. by the server unit (or a different server).

For example, according to an embodiment the program element being executed on a sender unit is provided by the server unit via a web service and is executed in a web browser of the sender unit. Likewise, according to an embodiment the program element being executed on a recipient unit may be provided by the server unit via a web service and is executed in a web browser of the recipient unit.

According to an embodiment, the payload is transmitted end-to-end secured. According to a further embodiment, there is no need for a user account or further authentication. According to a further embodiment, each transmission process (exchange of payload between the sender unit and the recipient unit) is managed as a unique transaction. This may allow for traceability of transactions.

According to further embodiments of the first aspect, the method is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the second aspect, the method of operating a sender unit is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the third aspect, the method of operating a recipient unit is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the fourth aspect, the method of operating a server unit is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the fifth aspect, the sender unit (for example the control unit thereof) is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the sixth aspect, the recipient unit (for example the control unit thereof) is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the seventh aspect, the server unit (for example the control unit thereof) is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the eighth aspect, the communication network (for example at least one unit thereof) is adapted for providing the functionality or features of one or more of the herein disclosed embodiments and/or for providing the functionality or features as required by one or more of the herein disclosed embodiments, in particular of the embodiments of the first to nineth aspect disclosed herein.

According to further embodiments of the nineth aspect, the computer program product (for example the program element thereof) is adapted for providing the functionality or features of one or more of the herein disclosed embodiments and/or for providing the functionality or features as required by one or more of the herein disclosed embodiments, in particular of the embodiments of the first to nineth aspect disclosed herein.

Generally herein, generating a key from a piece of data may be referred to as deriving (or calculating) the key from the piece of data.

Regarding the fifth and sixth aspect it is noted that sender unit and/or the recipient unit (or the control unit thereof) may be only temporarily configured as described herein, e.g. by executing a respective program element provided by a web service. According to an embodiment, the sender unit is configured for receiving from a server unit a computer program product which is configured for providing the sender unit with the functionality as defined herein. According to a further embodiment, the recipient unit is configured for receiving from a server unit a computer program product which is configured for providing the recipient unit with the functionality as defined herein.

A control device as described herein may be implemented by at least one of hardware and software. For example, the control device may comprise a processor device and a computer program product according to embodiments of the herein disclosed subject matter, e.g. a memory for storing the program element.

According to an embodiment, the program element is a non-transitory program element. Further, as used herein, reference to a computer program product is intended to be equivalent to a reference to a computer program containing a program element as described herein and/or a computer readable medium containing a program element as described herein. According to an embodiment, the program element is configured for controlling a processor device to effect and/or coordinate the performance of a method as described herein. According to an embodiment, the processor device is a network node and/or a computer comprising a memory and at least one processor for executing instructions defined by the program element.

The (non-transitory) program element may be implemented as computer readable instruction code by use of any suitable programming language, such as, for example, JAVA, Javascript, C++, C#, etc., and may be stored on a computer-readable medium (removable disk, volatile or non-volatile memory, embedded memory/processor, etc.). The instruction code is operable to program a computer or any other programmable device to carry out the intended functions. The computer program product may be available from a network, such as the World Wide Web, from which it may be downloaded.

Any suitable aspect or embodiment of the herein disclosed subject matter may be realized by means of a computer program respectively software. However, the herein disclosed subject matter may also be realized by means of one or more specific electronic circuits respectively hardware. Furthermore, the herein disclosed subject matter may also be realized in a hybrid form, i.e. in a combination of software modules and hardware modules.

In the above there have been described and in the following there will be described exemplary embodiments of the subject matter disclosed herein with reference to a (general) method, a method of operating a sender unit, a method of operating a recipient unit, a method of operating a server unit, a sender unit, a recipient unit, a server unit and a communication network as well as a computer program product. It has to be pointed out that of course any combination of features relating to different aspects of the herein disclosed subject matter is also possible. In particular, some features have been or will be described with reference to device type embodiments (e.g. relating to a sender unit, a recipient unit, a server unit or a communication network (or a control device thereof) whereas other features have been or will be described with reference to method type embodiments (e.g. relating to a respective method or a computer program product). However, a person skilled in the art will gather from the above and the following description that, unless otherwise notified, in addition to any combination of features belonging to one aspect also any combination of features relating to different aspects or embodiments, for example even combinations of features of device type embodiments and features of the method type embodiments are considered to be disclosed with this application. In this regard, it should be understood that any method feature derivable from a corresponding explicitly disclosed device feature should be based on the respective function of the device feature and should not be considered as being limited to device specific elements disclosed in conjunction with the device feature. Further, it should be understood that any device feature derivable from a corresponding explicitly disclosed method feature can be realized based on the respective function described in the method with any suitable device disclosed herein (e.g. a processor device) or known in the art.

According to an embodiment, a method disclosed herein may define the functionality of a device disclosed herein without being limited to the device-specific features. In this respect, any functionality of a device disclosed herein is intended to implicitly disclose a corresponding method defined exclusively by the disclosed functionality. Conversely, according to an embodiment, a method disclosed herein may be carried out using any suitable known device (which may have a single element or multiple cooperating elements). In this respect, any method disclosed herein is intended to implicitly disclose a corresponding device configured to perform the method.

It is noted that, unless expressly stated otherwise, numeral words (first, second, third, etc.) are merely used to identify various elements (for example, data, keys, etc.), without the numeral words implying an order of method steps, and without the numeral words requiring or implying an existence of any of the other various elements. For example, a reference to a second data or a second key alone does not require that a first data or a first key be generated before the second data / second key. Further, a reference to a second data / second key does not require that a first data / first key already exists or is provided at all.

Unless explicitly stated otherwise, according to one embodiment, a listing of features or process steps does not yet define necessarily an order of the features or the process steps in the sequence of the listing.

The aspects and embodiments defined above and further aspects and embodiments of the herein disclosed subject matter are apparent from the examples to be described hereinafter and are explained with reference to the drawings, but to which the invention is not limited. The aforementioned definitions and comments are in particular also valid for the following detailed description and vice versa.

BRIEF DESCRIPTION OF THE DRAWINGS

Fig. 1 shows a communication network according to embodiments of the herein disclosed subject matter.

Fig. 2 illustrates the operation of a sender unit and a server unit according to embodiments of the herein disclosed subject matter.

Fig. 3 illustrates the operation of a recipient unit and a server unit according to embodiments of the herein disclosed subject matter.

DETAILED DESCRIPTION

The illustration in the drawings is schematic. It is noted that in different figures, similar or identical elements are provided with the same reference signs. Accordingly, the description of the similar or identical features (or features which are similar or identical at least in its functions) is not repeated in the description of subsequent figures in order to avoid unnecessary repetitions. Rather, it should be understood that the description of these features in the preceding figures is also valid for the subsequent figures unless explicitly noted otherwise.

It should be understood that an exemplary implementation of the elements described below and marked with reference signs are shown in the respective drawings and configured according to the corresponding description, unless otherwise indicated.

It should further be noted that embodiments described in connection with an exemplary implementation (i.e., an exemplary combination of embodiments) with reference to a particular drawing are not limited to that particular implementation. Rather, as explained above, the embodiments described herein may be combined in any manner. Thus, embodiments described with reference to different implementations in different drawings may also be combined.

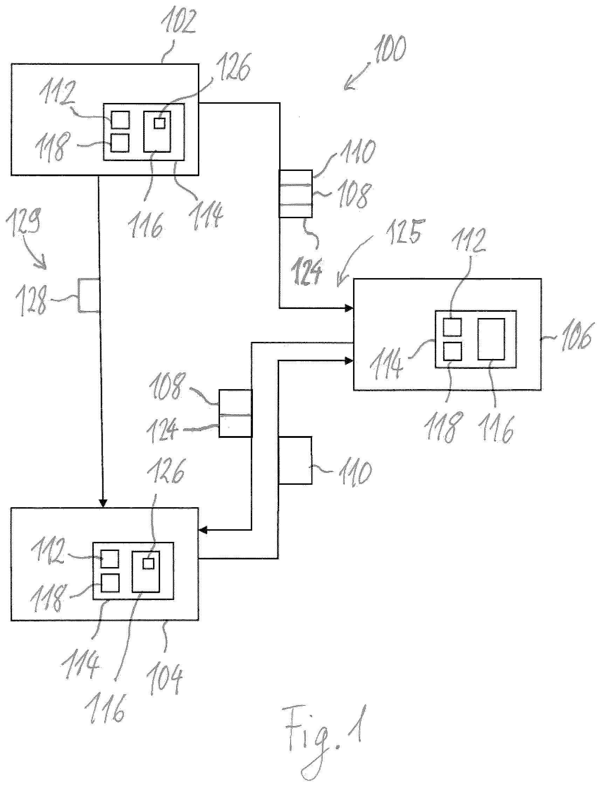

Fig. 1 shows a communication network 100 according to embodiments of the herein disclosed subject matter.

According to an embodiment, the communication network 100 comprises a sender unit 102, a recipient unit 104 and a server unit 106. According to an embodiment, the sender unit 102, the recipient unit 104 and the server unit 106 are network nodes of the communication network 100. According to an embodiment, the communication network 100 is configured for transferring an encrypted payload from the sender unit 102 to the recipient unit 104. To this end and in accordance with an embodiment, the sender unit 102 is configured for encrypting a payload with a first key (schematically indicated in Fig. 1 at 126) so as to generate an encrypted payload 108. According to a further embodiment, the sender unit 102 is configured for providing (e.g. transferring) the encrypted payload 108 to the server unit 106. According to a further embodiment, the recipient unit 104 is configured for providing a second key 110 to the server unit 106. According to a further embodiment, the server unit 106 is configured for providing the encrypted payload 108 to the recipient unit 104, e.g. upon approval of the second key 110 (which was provided by the recipient unit) by the server unit 106. According to an embodiment, the first key 126 and/or the second key 110 are generated by the sender unit 102. According to an embodiment, the first key 126 generated by the sender unit 102 is kept secret by the sender unit 102. For example, according to an embodiment, the first key 126 generated by the sender unit 102 is not provided to the server unit 106 and is not provided to the recipient unit 104 (and, according to an embodiment, also not to any other unit/network node).

According to an embodiment, the first key 126 is a symmetric key, thereby enabling decryption of the encrypted payload 108 with the first key 126.

According to an embodiment, the first key 126 and/or the second key 110 is generated by the recipient unit, e.g. both, the first key 126 and the second key 110, e.g. as shown in Fig. 1. According to an embodiment, the first key 126 generated by the recipient unit 104 is kept secret by the recipient unit 104. For example, according to an embodiment, the first key 126 generated by the recipient unit 104 is not provided to the server unit 106 and is not provided to the sender unit 102 (and, according to an embodiment also not to any other unit/network node), e.g. as shown in Fig. 1.

According to a further embodiment, the sender unit 102 is configured for providing a first part 124 of data necessary to generate the first key 126 (herein also referred to as first data) via a first data path 125 (e.g. a data path 125 including the server unit 106, e.g. as shown in Fig. 1). According to a further embodiment, the sender unit 102 is configured for providing a second part 128 of the data necessary to generate the first key 126 (herein also referred to as second data) via a second data path 129 (e.g. a data path 129 not including the server unit 106, e.g. as shown in Fig. 1). According to an embodiment, the server unit 106 is further configured for providing the first part 124 of data to the recipient unit 104 upon approval of the second key 108 (which was provided by the recipient unit 104) by the server unit 106, e.g. as shown in Fig. 1.

Providing data (e.g. the encrypted payload 108, the second key 110, the first data 124, the second data 128, etc.) from one unit to another unit is generally indicated by arrows in Fig. 1. Providing data as described herein may be effected by one or more transmission from one unit to another unit.

According to a further embodiment, transmissions described herein (e.g. transmissions between units, e.g. transmissions involving at least two of the sender unit, the recipient unit and the server unit) may include additional data not described with regard to Fig. 1, e.g. private data. Furthermore, the units may be configured for effecting further transmissions between units, e.g. acknowledgement transmissions, which acknowledge receipt of a transmission.

According to an embodiment, the sender unit 102, the recipient unit 104 and the server unit 106 each comprises a random number generator 112 capable of generating random numbers as described herein. Further, according to an embodiment the sender unit 102, the recipient unit 104 and the server unit 106 each comprises a control unit 114. According to an embodiment, the control unit comprises a storage 116 and a processor device 118. According to an embodiment, the processor device 118 is configured for executing a program element of a computer program product as described herein in order to provide the respective functionality of the respective control unit 114. According to an embodiment, the storage 116 is configured for storing the computer program product or for storing the program element.

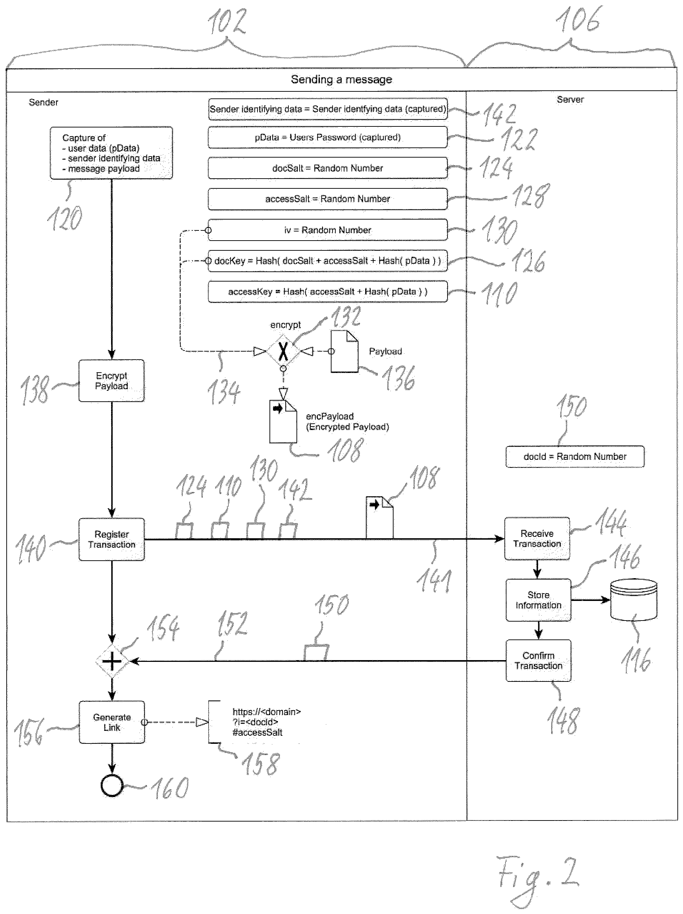

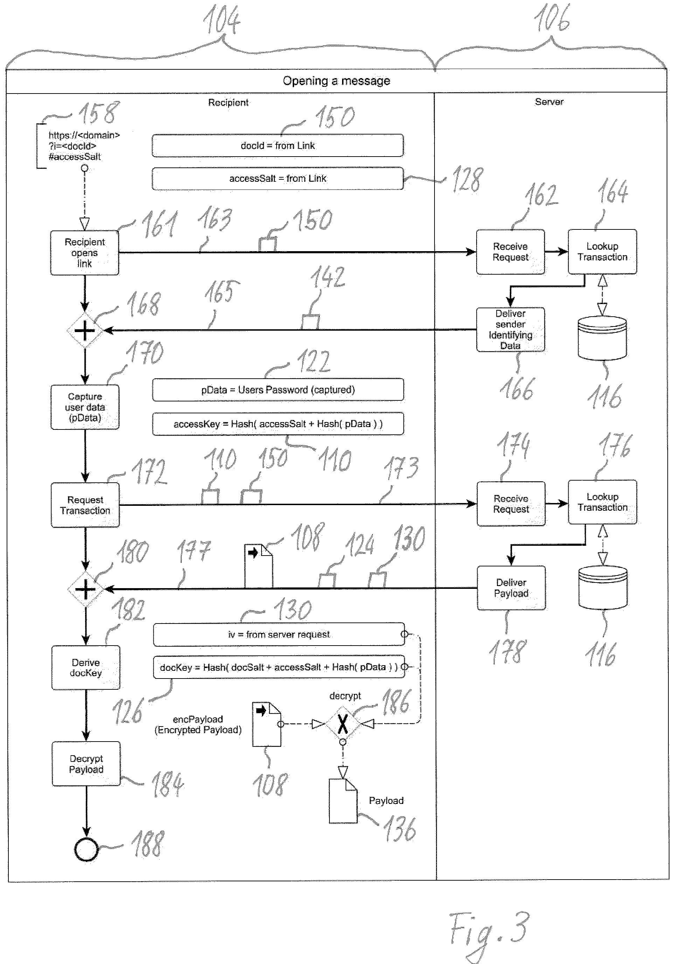

In the following, further embodiments and functionality of the individual units 102, 104 and 106 of the communication network 100 are described with regard to Fig. 2 and Fig. 3 in greater detail.

Fig. 2 illustrates the operation of the sender unit 102 and the server unit 106 according to embodiments of the herein disclosed subject matter.

In particular, Fig. 2 describes initiating a transaction for providing a payload in a secure manner from the sender unit 102 to the recipient unit 104 (not shown in Fig. 2), e.g. sending a message in a secure manner from the sender unit 102 to the recipient unit 104.

According to an embodiment, the sender unit 102 captures data, e.g. private data 122 of a user (user data, e.g. a user's password), sender identifying data 142 and a payload 136 (e.g. a document and/or a message that shall be transmitted to the recipient unit), as indicated at 120. Hence, according to an embodiment the sender unit 102 comprises (e.g. at least has access to) the private data 122. Further, according to an embodiment the sender unit 102 generates a first random number 124 used for generating the first key 126. For example, the random number 124 (and other random numbers) may be generated by a random number generator 112 described with regard to Fig. 1). In an embodiment, the first random number 124 is also referred to as document salt. Further, according to an embodiment the sender unit 102 generates a second random number 128 used for generating the first key 126. In an embodiment, the second random number 128 is also referred to as access salt. Further, according to an embodiment the sender unit 102 generates a third random number 130 used as initialization vector for encryption algorithm indicated at 132 in Fig. 2.

According to an embodiment, the first key 126 is generated as a hash value from the concatenated first random number 124, second random number 128, and a hash value of the private data 122. Hence, according to an embodiment the first key 126 is generated as follows (the term "random number" is abbreviated by RN and H() being the hash function):

$$\text{First key } 126 = H(\text{first RN } 124 + \text{second RN } 128 + H(\text{private data } 122))$$

According to a further embodiment, the second key 110 is generated as a hash value from the concatenated second random number 128 and the hash value of the private data 122. Hence, according to an embodiment the second key 110 is generated as follows:

$$\text{Second key } 110 = H(\text{second RN } 128 + H(\text{private data } 122)).$$

In this regard it is noted that any embodiment described herein denotes optional features of the herein disclosed subject matter. For example, also the key generation may be effected in any suitable way and even if (in accordance with an embodiment) the same input parameters (e.g. first RN 124, second RN 128, private data 122 for the first key) are used as described above, the key generation may be performed in numerous ways.

According to an embodiment, the encryption algorithm 132 uses the first key 126 and the third random number 130 as input values, indicated at 134 in Fig. 2, so as to encrypt a payload 136 into the encrypted payload 108. The encryption of the payload is generally shown at 138 in Fig. 2.

According to an embodiment, after capturing data, indicated at 120, the transaction is registered at the server unit 106 and includes the following:

- Registration of the transaction, generally indicated at 140 in Fig. 2.
- Receiving of the transaction by the server unit 106, generally indicated at 144 in Fig. 2.
- Storing of the received information, indicated at 146 in Fig. 2.
- Confirming of the transaction to the sender unit 102, generally indicated at 148 in Fig. 2.

According to an embodiment, registration of the transaction starts with providing, indicated at 141, from the sender unit 102 to the server unit 106 the first random number 124, the second key 110, the third random number 130, the sender identifying data 142 and the encrypted payload 108.

The server unit 106 receives the information from the sender unit 102 and stores the received information (i.e. the first random number 124, the second key 110, the third random number 130, the sender identifying data 142 and the encrypted payload 108, e.g. in the storage 116. The storage 116 may comprise any type of storage, e.g. one or more of volatile and/or non-volatile memory, file systems or databases. Further, according to an embodiment the server unit 106 generates a payload identifier 150 (e.g. a document identifier (in short docId)) for each transaction. According to an embodiment, the payload identifier 150 is a random number generated by random number generator 112 of the server unit 106 (see Fig. 1). While random number generators 112 are illustrated separately in Fig. 1, it is noted that of course the random number generator 112 may be implemented in any suitable way, e.g. in software (e.g. a processing element) running on the processor device 118.

According to an embodiment, confirming the transaction to the sender unit 102 includes providing, indicated at 152, the payload identifier 150 to the sender unit 102, e.g. as shown in Fig. 1.

According to an embodiment, at the sender unit 102 the operation commences, indicated at 154, upon receiving the confirmation of the transaction including the payload identifier 150. According to an embodiment, upon receiving the payload identifier 150 the sender unit 102 generates a link 158, indicated at 156, and provides the link 158 to the recipient 104, indicated at 160. According to an embodiment, the link 158 includes a reference to the encrypted payload at the server unit 106. Further, according to an embodiment the link 158 includes data (e.g. the second random number 128, e.g. the access salt) necessary for generating the first key, e.g. as URI fragment (preceded by a #). For example, according to an embodiment, the link 158 is configured as follows:
https://<domain>?i=<payload identifier 150>#second RN 128

In summary, operating a sender unit 102 according to embodiments of the herein disclosed subject matter may include:

- capturing data of a user, e.g. private data 122, sender identifying data 142 and a payload 136, e.g. as indicated at 120;
- encrypting the payload 136 with the first key 126, e.g. as indicated at 138;
- registering the transaction at a server unit 104, e.g. as indicated at 140;
- upon receiving a document identifier 150 from the server unit 104, generating a link 158 including the document identifier 150, e.g. as indicated at 156;
- providing the link to recipient unit 104, e.g. as indicated at 160.

Further, in summary, operating a server unit 106 according to embodiments of the herein disclosed subject matter may include:

- receiving a transaction (for example, according to an embodiment, information related to an encrypted payload 108) from a sender unit 102, e.g. as indicated at 144;
- storing the information related to the transaction (e.g., information related to the encrypted payload) in a storage 116, e.g. as indicated at 146;
- confirming the transaction to the sender unit 102, e.g. as indicated at 148.

Fig. 3 illustrates the operation of the recipient unit 104 and the server unit 106 according to embodiments of the herein disclosed subject matter.

In particular, Fig. 3 describes how the recipient unit 104 receives the payload. In accordance with an embodiment, receiving the payload by the recipient unit 104 in a secure manner from the sender unit 102 (not shown in Fig. 3), may be opening a message provided in a secure manner from the sender unit 102 to the recipient unit 104.

According to an embodiment, the operation of the recipient unit 104 according to embodiments of the herein disclosed subject matter starts with receiving the link 158 from the sender unit 102. Accordingly, in an embodiment, upon opening the link 158 the recipient unit 104 comprises the payload identifier 150 and the second random number 128 (e.g. the access salt).

According to an embodiment, the recipient unit 104 is configured for (or e.g. a user triggers) opening the link 158, indicated at 161 in Fig. 3, thereby providing (e.g. submitting) the payload identifier 150 to the server unit 106, indicated at 163. According to an embodiment, the server unit 106 is configured for, upon receiving the payload identifier 150, indicated at 162 in Fig. 2, looking up the transaction (i.e. the transaction related to the payload identifier 150) in the storage 116 (indicated at 164). According to an embodiment, the server unit 106 is configured for providing, e.g. delivering, (indicated at 166) data related to the payload identifier 150 (e.g. the sender identifying data 142) to the recipient unit 104 (see 165).

According to an embodiment, upon receiving the sender identifying data 142 by the recipient unit 104, the recipient unit 104 resumes operation, indicated at 168. According to a further embodiment, the recipient unit 104 uses the sender identifying data provided by the server unit 106 to capture the private data 122, indicated at 170 in Fig. 3.

According to an embodiment, the recipient unit 104 is configured for generating the second key 110 from the second random number 128 and the private data 122. For example, according to an embodiment the recipient unit 104 is configured for generating the second key 110 as a hash value of the concatenated second random number 128 and the hash value of the private data. Hence, according to an embodiment the second key 110 is generated as follows:

$$\text{Second key 110} = H \text{ (second random number 128} + H \text{ (private data 122))}.$$

It is noted, that in accordance with an embodiment, the second random number 128 is received by the recipient unit via the link.

According to an embodiment, the recipient unit 104 is configured for requesting the transaction (e.g. requesting the encrypted payload) from the server unit 106, indicated at 172. To this end, the recipient unit is according to an embodiment configured so as to provide the second key 110 and the payload identifier 150 to the server unit 106, indicated at 173.

According to an embodiment, the server unit 106 is configured for, upon receiving the request (i.e. upon receiving the second key 110 and the payload identifier 150), indicated at 174, looking up the transaction (i.e. the information related to the payload identifier 150) in the storage 116 (indicated at 176). For example, according to an embodiment, the server unit 106 is configured for looking up the encrypted payload 108, the first random number 124 and, optionally, the third random number 130 related to the payload identifier 150. Further, according to an embodiment the server unit 106 is configured for providing the information related to the storage identifier to the recipient unit 104. For example, according to an embodiment, the server unit 106 is configured for providing, indicated at 177, the encrypted payload 108 associated with the payload identifier 150 to the recipient unit 104 (indicated at 178), as schematically shown in Fig. 3. According to a further embodiment, the server unit 106 further provides to the recipient unit 104 also the first random number 124 and the third random number 130 to the recipient unit 104.

Upon receiving the information related to the payload identifier 150, e.g. encrypted payload 108 and additional information (e.g. the first random number 124 and the third random number 130), the recipient unit 104 according to an embodiment is configured for resuming operation, indicated at 180.

According to an embodiment, the recipient unit 104 is configured for generating the first key 126 from the first random number 124, the second random number 128, and the private data 122, indicated at 182. According to an embodiment, the recipient unit 104 is configured for generating the first key 126 according to the same algorithm used by the sender unit 102. Hence, according to an embodiment the recipient unit 104 is configured for calculating the first key 126 as follows:

$$\text{First key 126} = H \text{ (first RN 124} + \text{second RN 128} + H \text{ (private data 122))}$$

According to an embodiment, the recipient unit 104 is configured for decrypting, indicated at 184, the encrypted payload 108 by using the first key 126 and the third random number 130 by using a decryption algorithm 186, as schematically shown in Fig. 3.

As a result, the payload 136 (not encrypted) is available to the recipient unit 104, indicated at 188 in Fig. 3.

Generally herein, providing data from a first unit to a second unit (e.g. from the sender unit to the recipient unit) may include

- sending the data from the first unit to the second unit
- offering the data by the first unit to the second unit for access, download, etc.

In summary, operating a recipient unit 104 according to embodiments of the herein disclosed subject matter may include:

- receiving a link 158 from a sender unit 102;
- opening the link 158, e.g. as indicated at 161;
- capturing data of a user, based on the link 158, e.g. as indicated at 170;
- requesting a transaction, e.g. as indicated at 172, at a sever unit 106 by using a second key 110;
- upon receiving (e.g. from the server unit 104) data necessary to generate the first key 126, generate the first key 126, e.g. as indicated at 182;
- decrypt the payload using the first key 126, e.g. as indicated at 184.

Further, in summary, operating a server unit 106 according to embodiments of the herein disclosed subject matter may include:

- receiving a request for sender identifying data 142 from a recipient unit 104, e.g. as indicated at 162;
- looking up a corresponding transaction at a storage of the server, e.g. as indicated at 164;
- deliver the sender identifying data 142 to the recipient unit 104, e.g. as indicated at 166;
- receiving a request for information related to a payload identifier 150, e.g. as indicated at 174;
- looking up a corresponding transaction (e.g., according to an embodiment, the information related to the payload identifier 150) at a storage of the server 106, e.g. as indicated at 176;
- deliver the information related to the payload identifier 108 (e.g. in an embodiment, the encrypted payload 108 and additional information 124, 130) to the recipient unit 104, e.g. as indicated at 178.

According to an embodiment, the encrypted payload 108 itself may be used as the payload identifier 150, although a random number is usually more efficient.

It should be understood that the above described implementation of embodiments of the herein disclosed subject matter described with regard to the drawings is just provided for easier understanding but should not be considered as limiting the present disclosure.

It should be noted that any entity disclosed herein (e.g. components, elements, units and devices) are not limited to a dedicated entity as described in some embodiments. Rather, the herein disclosed subject matter may be implemented in various ways and with various granularity on device level or software module level while still providing the specified functionality. Further, it should be noted that according to embodiments a separate entity (e.g. a software module, a hardware module or a hybrid module (combined software/hardware module)) may be provided for each of the functions disclosed herein. According to other embodiments, an entity (e.g. a software module, a hardware module or a hybrid module) is configured for providing two or more functions as disclosed herein. According to still other embodiments, two or more entities are configured for providing together a function as disclosed herein.

Further, it should be noted that while some entities, e.g. the exemplary control units in the drawings comprise a particular combination of several embodiments of the herein disclosed subject matter, any other combination of embodiment is also possible and is considered to be disclosed with this application and hence the scope of the herein disclosed subject matter extends to all alternative combinations of two or more of the individual features mentioned or evident from the text. All of these different combinations constitute various alternative examples of the herein disclosed subject matter.

It should be noted that the term "comprising" does not exclude other elements or steps and the "a" or "an" does not exclude a plurality. According to an embodiment, the term "comprising" includes the meaning "consisting of". According to a further embodiment, the term "comprising" includes the meaning "comprising inter alia". Also elements described in association with different embodiments may be combined. It should also be noted that reference signs in the claims should not be construed as limiting the scope of the claims. It should further be noted that reference signs in the description and the description's reference to the drawings should not be construed as limiting the scope of the description. Rather, the drawings illustrate only an exemplary implementation of a particular combination of several embodiments of the subject matter disclosed herein, any other combination of embodiments being equally possible and to be considered disclosed with this application.

According to an embodiment the term "adapted to" includes inter alia the meaning "configured to". Further, herein the disclosure of a function which is performed by an entity implicitly discloses that according to an embodiment the entity is configured to perform the function.

Further, it is noted that generally herein the term "in particular" denotes optional features. Further, the term "and/or" includes "and" as well as "or". For example, "A and/or B" includes "only A", "only B", as well as "A and B". Further, the term "at least one of A and B" or the term "one or more of A and B" includes "only A", "only B", as well as "A and B".

In order to recapitulate some of the above described embodiments of the herein disclosed subject matter one can state:

Described is a method comprising: exchanging an encrypted payload (108) between a sender unit (102) and a recipient unit (104); using a first key (126) for decryption of the encrypted payload (108); using a second key (110) for providing access to the encrypted payload (108); the first key (126) being different from the second key (110). Further described are a communication network (100), individual units (102, 104, 106) thereof as well as methods for operating the units (102, 104, 106).

## Claims

1.  A method comprising:

exchanging an encrypted payload (108) between a sender unit (102) and a recipient unit (104);
using a first key (126) for decryption of the encrypted payload;
using a second key (110) for providing access to the encrypted payload (108);
the first key (126) being different from the second key (110).

2. The method according to claim 1, further comprising

generating the first key (126) from at least two pieces of data (124, 128), the at least two pieces of data including first data (124) and second data (128); and
generating the second key (110) using the second data (128);
in particular wherein generating the first key (126) and/or generating the second key (110) comprises using private data (122);
the method comprising further in particular

providing the first data (124) via a first data path (125) to the recipient unit (104); and
providing the second data (128) via a second data path (129) to the recipient unit (104);
wherein the first data path (125) is different from the second data path (129).

3. The method according to any one of claims 1 or 2, the first key (126) being a symmetric key and the method further comprising:

generating the first key (126) by the sender unit (102) for encrypting a payload (136); and
generating the first key (126) by the recipient unit (102) for decrypting the encrypted payload (108).

4. The method according to any one of claims 1 to 3, further comprising

the sender unit (102) providing the encrypted payload (108) to a server unit (106);
providing data (128) necessary for generating the second key (110) from the sender unit (102) to the recipient unit (104) without providing these data (128) to the server unit (106); and/or
providing data (128) necessary for generating the first key (126) from the sender unit (102) to the recipient unit (104) without providing these data (128) to the server unit (106);
in particular wherein the providing of the data (128) necessary for generating the second key (110) and/or providing of data (128) necessary for generating the first key (126) includes providing a link (158) from the sender unit (102) to the recipient unit (104);
the link (158) including at least one of

the data (128) necessary for generating the second key (110),
the data (128) necessary for generating the first key (126), and
a reference to the encrypted payload (108) at the server unit (106);

the method further comprising in particular
providing the second key (110) from the recipient unit (104) to the server unit (106); and
upon approval, by the server unit (106), of the second key (110) provided by the recipient unit (104), providing by the server unit (106) to the recipient unit (104) the encrypted payload (108) and/or data (124) necessary for generating the first key (126).

5. The method according to claim 4 and further comprising the features of claim 2, the method further comprising:

providing, by the recipient unit (104), a payload identifier (150) to the server unit (106);
in response to providing the payload identifier (150) to the server unit (106), the recipient unit (104) receiving from the server unit (106) sender identifying data (142);
the recipient unit (104) capturing the private data (122) by using the sender identifying data (142);
in particular the method further comprising: the recipient unit (104) generating the second key (110) by using the private data (122) and the data (128) necessary for generating the second key (110);
further in particular the method further comprising: the recipient unit (104) generating the first key (126) by using the private data (122), the data (128) necessary for generating the second key (110) and the data necessary for generating the first key (124).

6. A method of operating a sender unit (102), the method comprising:

   generating an encrypted payload (108) by encrypting a payload (136) with a first key (126);
   providing, to a recipient unit (104), data (128) necessary for generating a second key (110) and/or data (124, 128) necessary for generating the first key (126), the second key (110) providing access to the encrypted payload (108);
   the first key (126) being different from the second key (110).

7. The method according to claim 6, further comprising

   providing the encrypted payload (108) to the recipient unit (104) via a first data path (125); and
   providing to the recipient unit (104) the data (128) necessary for generating the second key (110) and/or the data (128) necessary for generating the first key (126) via a second data path (129).

8. The method according to claim 6 or 7, wherein the data (128) necessary for generating the second key (110) and/or the data (128) necessary for generating the first key (126) is provided to the recipient unit by a link (158), the link (158) including the data necessary for generating the second key (128).

9. A method of operating a recipient unit (104), the method comprising:

   receiving data (128) necessary for generating a second key (110);
   generating the second key (110) by using the data (128) necessary for generating the second key (110), the second key (110) providing access to encrypted payload at a server unit;
   decrypting the encrypted payload (108) with a first key (126);
   the first key (126) being different from the second key (110).

10. A method of operating a server unit (106), the method comprising:

    receiving an encrypted payload (108) from a sender unit (102);
    storing the encrypted payload (108);
    the encrypted payload (108) being decryptable with a first key (126);
    the server unit (106) comprising neither the first key (126) nor all data necessary to generate the first key (126).

11. A sender unit (102), the sender unit comprising a control unit (114) being configured for performing the method according to claim 6.

12. A recipient unit (104), the recipient unit comprising a control unit (114) being configured for performing the method according to claim 9.

13. A server unit (106), the server unit comprising a control unit (114) being configured for performing the method according to claim 10.

14. A communication network (100), the communication network being configured for performing the method according to any one of claims 1 to 5.

15. A computer program product, the computer program product comprising a program element being configured for, when being executed on a processor device (118), performing the method according to any one of claims 1 to 5, 6 to 8, 9, or 10.

**Amended claims in accordance with Rule 137(2) EPC.**

1. A method comprising:

   exchanging an encrypted payload (108) between a sender unit (102) and a recipient unit (104);
   using a first key (126) for decryption of the encrypted payload;
   using a second key (110) for providing access to the encrypted payload (108);
   the first key (126) being different from the second key (110);
   generating the first key (126) from at least two pieces of data (124, 128), the at least two pieces of data including first data (124) and second data (128); and
generating the second key (110) using the second data (128).

2. The method according to claim 1,

wherein generating the first key (126) and/or generating the second key (110) comprises using private data (122);
the method comprising further in particular
providing the first data (124) via a first data path (125) to the recipient unit (104); and
providing the second data (128) via a second data path (129) to the recipient unit (104);
wherein the first data path (125) is different from the second data path (129).

3. The method according to any one of claims 1 or 2, the first key (126) being a symmetric key and the method further comprising:

generating the first key (126) by the sender unit (102) for encrypting a payload (136); and
generating the first key (126) by the recipient unit (102) for decrypting the encrypted payload (108).

4. The method according to any one of claims 1 to 3, further comprising

the sender unit (102) providing the encrypted payload (108) to a server unit (106);
providing data (128) necessary for generating the second key (110) from the sender unit (102) to the recipient unit (104) without providing these data (128) to the server unit (106); and/or
providing data (128) necessary for generating the first key (126) from the sender unit (102) to the recipient unit (104) without providing these data (128) to the server unit (106);
in particular wherein the providing of the data (128) necessary for generating the second key (110) and/or providing of data (128) necessary for generating the first key (126) includes providing a link (158) from the sender unit (102) to the recipient unit (104);
the link (158) including at least one of

the data (128) necessary for generating the second key (110),
the data (128) necessary for generating the first key (126), and
a reference to the encrypted payload (108) at the server unit (106);

the method further comprising in particular
providing the second key (110) from the recipient unit (104) to the server unit (106); and
upon approval, by the server unit (106), of the second key (110) provided by the recipient unit (104), providing by the server unit (106) to the recipient unit (104) the encrypted payload (108) and/or data (124) necessary for generating the first key (126).

5. The method according to claim 4 and further comprising the features of claim 2, the method further comprising:

providing, by the recipient unit (104), a payload identifier (150) to the server unit (106);
in response to providing the payload identifier (150) to the server unit (106), the recipient unit (104) receiving from the server unit (106) sender identifying data (142);
the recipient unit (104) capturing the private data (122) by using the sender identifying data (142);
in particular the method further comprising: the recipient unit (104) generating the second key (110) by using the private data (122) and the data (128) necessary for generating the second key (110);
further in particular the method further comprising: the recipient unit (104) generating the first key (126) by using the private data (122), the data (128) necessary for generating the second key (110) and the data necessary for generating the first key (124).

6. A method of operating a sender unit (102), the method comprising:

generating an encrypted payload (108) by encrypting a payload (136) with a first key (126);
providing, to a recipient unit (104), data (128) necessary for generating a second key (110) and/or data (124, 128) necessary for generating the first key (126), the second key (110) providing access to the encrypted payload (108);
the first key (126) being different from the second key (110);

the first key (126) being generatable from at least two pieces of data (124, 128), the at least two pieces of data including first data (124) and second data (128); and
the second key (110) being generatable using the second data (128).

7. The method according to claim 6, further comprising

providing the encrypted payload (108) to the recipient unit (104) via a first data path (125); and
providing to the recipient unit (104) the data (128) necessary for generating the second key (110) and/or the data (128) necessary for generating the first key (126) via a second data path (129).

8. The method according to claim 6 or 7, wherein the data (128) necessary for generating the second key (110) and/or the data (128) necessary for generating the first key (126) is provided to the recipient unit by a link (158), the link (158) including the data necessary for generating the second key (128).

9. A method of operating a recipient unit (104), the method comprising:

receiving data (128) necessary for generating a second key (110);
generating the second key (110) by using the data (128) necessary for generating the second key (110), the second key (110) providing access to encrypted payload at a server unit;
decrypting the encrypted payload (108) with a first key (126);
the first key (126) being different from the second key (110);
the first key (126) being generatable from at least two pieces of data (124, 128), the at least two pieces of data including first data (124) and second data (128); and
the second key (110) being generatable using the second data (128).

10. A method of operating a server unit (106), the method comprising:

receiving an encrypted payload (108) from a sender unit (102);
storing the encrypted payload (108);
receiving a second key (110) from a recipient unit (104)[10/6-7];
the encrypted payload (108) being decryptable with a first key (126);
the server unit (106) comprising neither the first key (126) nor all data necessary to generate the first key (126);
the first key (126) being generatable from at least two pieces of data (124, 128), the at least two pieces of data including first data (124) and second data (128); and
the second key (110) being generatable using the second data (128).

11. A sender unit (102), the sender unit comprising a control unit (114) being configured for performing the method according to claim 6.

12. A recipient unit (104), the recipient unit comprising a control unit (114) being configured for performing the method according to claim 9.

13. A server unit (106), the server unit comprising a control unit (114) being configured for performing the method according to claim 10.

14. A communication network (100), the communication network being configured for performing the method according to any one of claims 1 to 5.

15. A computer program product, the computer program product comprising a program element being configured for, when being executed on a processor device (118), performing the method according to any one of claims 1 to 5, 6 to 8, 9, or 10.

Fig. 1

Fig. 2

Opening a message

Recipient | Server

158

https://<domain>
?i=<docId>
#accessSalt

150

docId = from Link

accessSalt = from Link

128

161   163   150

Recipient
opens
link

162
Receive
Request

164
Lookup
Transaction

168   165   142

166

116

Deliver
sender
Identifying
Data

170

Capture
user data
(pData)

122

pData = Users Password (captured)

accessKey = Hash( accessSalt + Hash( pData ) )

172   110   150   110   173

174
Receive
Request

176
Lookup
Transaction

Request
Transaction

180   177   108   124   130

Deliver
Payload

178   116

182

130

iv = from server request

Derive
docKey

docKey = Hash( docSalt + accessSalt + Hash( pData ) )

126

encPayload
(Encrypted Payload)

decrypt   186

Decrypt
Payload

184

108

Payload

136

188

Fig. 3

Europäisches
Patentamt

European
Patent Office

Office européen
des brevets

# EUROPEAN SEARCH REPORT

Application Number

EP 23 18 8801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/189351 A1 (STEELY FORREST [US] ET AL) 3 July 2014 (2014-07-03) | 1,3,4, 6-15 | INV. H04L9/40 |
| A | * abstract; figures 1-6 * <br> * paragraphs [0033], [0039] * <br> * paragraphs [0051] - [0077] * | 2,5 | H04W12/03 G06F21/60 |
| X | US 2020/162252 A1 (DAVIS PETER [US] ET AL) 21 May 2020 (2020-05-21) | 1,3,4, 6-15 | |
| A | * abstract; figures 1, 5, 6, 7 * <br> * paragraphs [0022], [0057] * <br> * paragraphs [0062] - [0071] * <br> * paragraphs [0076] - [0081] * | 2,5 | |
| X | WO 2016/172474 A1 (ENCRYPTICS LLC) 27 October 2016 (2016-10-27) | 1,3,4, 6-9,11, 12,14,15 | |
| A | * abstract; figures 1, 3A, 3B, 4A, 4B * <br> * paragraphs [0017] - [0021] * <br> * paragraphs [0037] - [0055] * | 2,5,10, 13 | |
| X | US 2004/030893 A1 (KARAMCHEDU MURALI M [US] ET AL) 12 February 2004 (2004-02-12) | 1,3,4, 6-9,11, 12,14,15 | TECHNICAL FIELDS SEARCHED (IPC) |
| A | * abstract; figures 1, 2, 3, 8, 9 * <br> * paragraphs [0032] - [0041] * <br> * paragraphs [0057] - [0061] * | 2,5,10, 13 | H04L H04W G06F |

The present search report has been drawn up for all claims

| Place of search | Date of completion of the search | Examiner |
|---|---|---|
| Munich | 8 January 2024 | Schossmaier, Klaus |

EPO FORM 1503 03.82 (P04C01)

**EP 4 503 514 A1**

## ANNEX TO THE EUROPEAN SEARCH REPORT
## ON EUROPEAN PATENT APPLICATION NO.

EP 23 18 8801

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2024

| Patent document cited in search report | | | Publication date | Patent family member(s) | | | Publication date |
|---|---|---|---|---|---|---|---|
| US 2014189351 | A1 | | 03-07-2014 | NONE | | | |
| US 2020162252 | A1 | | 21-05-2020 | CA | 3119735 | A1 | 22-05-2020 |
| | | | | EP | 3881489 | A1 | 22-09-2021 |
| | | | | US | 2020162252 | A1 | 21-05-2020 |
| | | | | US | 2022321342 | A1 | 06-10-2022 |
| | | | | WO | 2020102696 | A1 | 22-05-2020 |
| WO 2016172474 | A1 | | 27-10-2016 | US | 2016315918 | A1 | 27-10-2016 |
| | | | | US | 2018295108 | A1 | 11-10-2018 |
| | | | | US | 2019334878 | A1 | 31-10-2019 |
| | | | | US | 2020067892 | A1 | 27-02-2020 |
| | | | | US | 2021058381 | A1 | 25-02-2021 |
| | | | | WO | 2016172474 | A1 | 27-10-2016 |
| US 2004030893 | A1 | | 12-02-2004 | AU | 2003257194 | A1 | 25-02-2004 |
| | | | | CA | 2495034 | A1 | 19-02-2004 |
| | | | | US | 2004030893 | A1 | 12-02-2004 |
| | | | | WO | 2004015942 | A1 | 19-02-2004 |

EPO FORM P0459

For more details about this annex : see Official Journal of the European Patent Office, No. 12/82